# EUROPÄISCHE PATENTSCHRIFT

(11) **EP 2 125 582 B1**
(45) Veröffentlichungstag und Bekanntmachung des Hinweises auf die Patenterteilung: **25.08.2010**
(21) Anmeldenummer: 07856061.2
(22) Anmeldetag: 06.12.2007
(51) Int. Cl.: B65G 41/00, E21F 13/08

(54) **VERFAHRBARER STETIGFÖRDERER UND VERFAHREN ZUR STEUERUNG EINES VERFAHRBAREN STETIGFÖRDERERS**
MOVABLE CONTINUOUS CONVEYOR AND METHOD FOR OPERATING A MOVABLE CONTINUOUS CONVEYOR
TRANSPORTEUR CONTINU MOBILE ET PROCÉDÉ DE COMMANDE D'UN TRANSPORTEUR CONTINU MOBILE

(30) Priorität: 07.12.2006 DE 102006058067
(43) Veröffentlichungstag der Anmeldung: 02.12.2009
(73) Patentinhaber: Ecker Ingenieurgesellschaft mbh, 52355 Düren (DE)
(72) Erfinder: ECKER, Robert, 52391 Vettweiss (DE)
(74) Vertreter: Castell, Klaus
(86) Internationale Anmeldenummer: PCT/DE2007/002203
(87) Internationale Veröffentlichungsnummer: WO 2008/067802

(56) Entgegenhaltungen:
- WO-A-97/02200
- DE-A1- 10 149 101
- US-A- 4 646 906
- US-A- 6 006 894

## Beschreibung

Die Erfindung betrifft einen verfahrbaren Stetigförderer aus einzelnen Fahrmodulen, wobei jedes Fahrmodul Stetigfördermittel und ein Raupenfahrwerk aufweist. Weiterhin betrifft die Erfindung ein Verfahren zur Steuerung eines verfahrbaren Stetigförderers.

Stetigförderer werden häufig als Fördermittel für Massengüter eingesetzt. Hierbei wird das Fördergut in der Regel über ein endloses Tragband geführt, wobei das Tragband an einer Tragvorrichtung angeordnet ist. In der Regel läuft das Tragband über Rollen, wobei meistens eine an einem Ende liegende Rolle als Umlenkrolle und als Antriebsrolle verwendet wird.

Es wurde auch vorgeschlagen, Stetigförderer auf einem Fahrwerk anzuordnen, um die Position des Stetigförderers leichter variieren zu können.

Ein gattungsgemäßer verfahrbarer Stetigförderer ist aus der DE 101 49 101 A1 bekannt. Bei diesem Stetigförderer für Massentransportgüter ist das Traggerüst für das Stetigfördermittel bodenseitig mit einem Fahrwerk in Form einer Raupe ausgerüstet. Dadurch kann das gesamte Traggerüst als Fahreinheit einer Vortriebsmaschine folgen. Die Raupe erlaubt es, das Traggerüst auch über einen unebenen Boden zu verfahren.

Ein verfahbarer Stetigförderer aus einzelnen Fahrmodulen ist auch aus der WO 97/02200 A bekannt.

Es hat sich jedoch herausgestellt, dass ein Stetigförderer wie er in der DE 101 49 101 A1 beschrieben ist nur eine begrenzte Mobilität aufweist. Das in dieser Anmeldung beschriebene Fördermittel ist zwar für eine begrenzte Kurvengängigkeit ausgerüstet. Das beschriebene Fahrwerk ist jedoch nur sehr begrenzt zur Veränderung der Position des Stetigförderers geeignet.

Der Erfindung liegt daher die Aufgabe zu Grunde, einen gattungsgemäßen Stetigförderer derart weiter zu entwickeln, dass er eine besonders große Mobilität und Flexibilität aufweist.

Diese Aufgabe wird mit einem verfahrbaren Stetigförderer aus einzelnen Fahrmodulen gelöst, wobei jedes Fahrmodul stetig Fördermittel und ein Raupenfahrwerk aufweist, wobei das Raupenfahrwerk mehr als einen Raupenzug aufweist.

Die Verwendung von einzelnen Fahrmodulen mit Raupenfahrwerken, die mehr als einen Raupenzug aufweisen, ermöglicht es nicht nur Massengüter auf dem Stetigförderer relativ zum Fahrmodul zu fördern, sondern auch den gesamten Stetigförderer sehr flexibel zu bewegen.

Hierbei ist es vorteilhaft, wenn das Raupenfahrwerk mindestens zwei parallel zu einander angeordnete Raupenzüge aufweist. Dadurch kann eine stabile Lagerung des Raupenfahrwerks auch auf unebenem Boden während einer Lageveränderung des Stetigförderers erzielt werden.

Das Raupenfahrwerk ermöglicht es, den Stetigförderer zu ziehen oder zu verschieben, ohne dass der in der Regel relativ lang ausgebildete Förderer droht umzufallen. Besonders vorteilhaft ist es jedoch, wenn mindestens ein Fahrmodul einen Raupenzugantrieb aufweist. Dies ermöglicht es den Stetigförderer durch das Raupenfahrwerk angetrieben in eine andere Position zu bringen.

Hierbei ist bevorzugt vorgesehen, dass mindestens zwei parallel zu einander angeordnete Raupenzüge unterschiedlich antreibbar sind. Das unterschiedliche Antreiben parallel angeordneter Raupenzüge erlaubt eine gewisse Lenkung oder einen Ausgleich bei einer Fahrt um eine Kurve.

Alternativ oder kumulativ ist vorgesehen, dass zwei aufeinander folgende Fahrmodule mittels mindestens einem Lenkzylinder miteinander verbunden sind. Ein derartiger Lenkzylinder kann durch einen Gewindestab, der in einer Gewindehülse geführt ist, realisiert werden. Alternativ sind auch pneumatische oder hydraulische Lenkzylinder je nach Anwendungsfall vorteilhaft. Die Lenkzylinder erlauben es, Kräfte zwischen Fahrmodulen zu erzeugen, mit denen eine Kurvenfahrt hervorgerufen werden kann. Sie erlauben es insbesondere, eine sehr genaue und reproduzierbare Kurvenfahrt durchzuführen und beispielsweise nach einem vorgegebenen Plan ferngesteuert den Stetigförderer in eine vorbestimmte, definierte Position zu bringen.

Eine besonders enge Kurvengängigkeit wird dadurch erzielt, dass zwei aufeinander folgende Fahrmodule mittels zwei Lenkzylindern miteinander verbunden sind. Die Fahrmodule können hierbei entweder direkt oder über ein Zwischenstück mittels den Lenkzylindern miteinander verbunden sein.

Konstruktiv hat es sich als besonders vorteilhaft herausgestellt, wenn nur einseitig am Fahrmodul Lenkzylinder angeordnet sind.

Insbesondere im Grubenbereich werden elektrische Motoren gerne vermieden und es wird daher vorgeschlagen, dass der Stetigförderer mindestens einen Hydraulikzylinder als Lenkzylinder aufweist.

Eine kostengünstige Herstellung eines derartigen Stetigförderers wird dadurch begünstigt, dass jedes Fahrmodul eine Rahmenkonstruktion mit einer Führung für das Stetigfördermittel aufweist.

Weiterhin ist es vorteilhaft, wenn jedes Fahrmodul eine Rahmenkonstruktion mit einer Kettenführung aufweist. Eine derartige Kette wird in der Regel für den Antrieb des Stetigfördermittels verwendet, das auf einer Führung gelagert ist.

Eine stabile leichte Konstruktion der Fahrmodule wird erzielt, wenn jedes Fahrmodul eine Rahmenkonstruktion mit mehreren Querverstrebungen aufweist. Besonders kostengünstig ist die Herstellung, wenn der Stetigförderer eine Rahmenkonstruktion mit zwei gleichen sich entsprechenden gelenkig miteinander verbundenen Rahmenteilen aufweist. Dies ermöglicht auch eine besonders flexible Anpassung an horizontale Bodenunebenheiten oder bei Kurven.

Es wird daher vorgeschlagen, dass mindestens ein Fahrmodul eine Rahmenkonstruktion mit Rahmenteilen aufweist, die aus einer horizontalen Ebene heraus gelenkig miteinander verbunden sind.

Eine besondere Flexibilität kann erreicht werden, wenn zwischen zwei Fahrmodulen ein Brückenmodul angeordnet ist. Hierbei wird fortbildend vorgeschlagen, dass der Stetigförderer ein Brückenmodul mit einer Rahmenkonstruktion mit einer Führung für das Stetigfördermittel aufweist.

Die Flexibilität wird dadurch noch gesteigert, dass das Brückenmodul mittels Drehgelenken mit den Fahrmodulen verbunden ist.

Diese Drehgelenke können ein Abknicken des Stetigförderers aus einer horizontalen Ebene ermöglichen.

Kumulativ oder alternativ können die Drehgelenke auch ein Abknicken des Stetigförderers aus einer vertikalen Ebene heraus ermöglichen. Dadurch erleichtern die Drehgelenke des Brückenmoduls ein Nachführen des Stetigförderers über beträchtliche Bodenunebenheiten und um Kurven.

Fortbildend wird vorgeschlagen, dass der Stetigförderer ein Umlenkmodul für das Stetigfördermittel an einem Ende des Stetigförderers aufweist.

Eine besonders energiesparende Förderung auf dem Stetigförderer wird dadurch erzielt, dass das Stetigfördermittel auf Rollen geführt ist. Der Stetigförderer hat somit ein Stetigfördermittel, das mit Rollen am Fahrmodul befestigt ist und das Fahrmodul weist Raupen auf, mit denen das Stetigfördermittel im Raum verfahrbar ist.

Als Stetigfördermittel eignen sich Förderbände oder auch aneinander gereihte Behältnisse. Besonders vorteilhaft ist es, wenn das Stetigfördermittel ein Trogförderer ist.

Hierzu wird besonders bevorzugt vorgeschlagen, dass die Tröge des Trogförderers miteinander verschraubt sind.

Weiterhin wird vorgeschlagen, dass die Tröge des Trogförderers an einer Antriebskette befestigt sind. Diese Antriebskette ist in der Regel eine umlaufende Kette, die die Zugkräfte aufnimmt, während die an der Kette befestigten Trogförderer möglichst keine Zugkräfte aufnehmen sollten.

Eine besondere Ausführungsform sieht vor, dass ein Fahrmodul einen Hydroaggregat aufweist. Eine modulartige Bauweise des Stetigförderers kann dadurch erzielt werden, dass jedes Fahrmodul ein Hydroaggregat aufweist.

Dieses Hydroaggregat ist für verschiedene Funktionen verwendbar. Nach einer Ausführungsform der Erfindung ist vorgesehen, dass das Hydroaggregat einen Antrieb für das Stetigfördermittel versorgt. Weiterhin wird vorgeschlagen, dass das Hydroaggregat einen Antrieb für die Raupenzüge versorgt. Letztlich kann das Hydroaggregat auch Lenkzylinder versorgen.

Hierbei ist es besonders vorteilhaft, wenn die Lenkzylinder mit einer Steuerung in Verbindung stehen.

Eine bevorzugte Ausführungsvariante sieht vor, dass die Steuerung ein Wegmesssystem aufweist. Das Wegmesssystem ermöglicht es, beim Verfahren des Stetigförderers die Wegpunkte aller Fahrwerke abzufragen und zu speichern. Die Steuerung kann sich dann den Verfahrweg merken und dadurch gewährleisten, dass Hin- und Rückweg der Gesamtanlage des Stetigförderers immer auf der gleichen Spur erfolgen.

Zur Erfindung wird daher auch ein Verfahren zur Steuerung eines verfahrbaren Stetigförderers, insbesondere eines zuvor beschriebenen Stetigförderers vorgeschlagen, bei dem eine Steuerung über die Position von Lenkzylindern die Antriebsgeschwindigkeiten von Raupen eines Raupenfahrwerks regelt oder steuert. Über die Lenkzylinderposition regelt die Steuerung die unterschiedlichen Antriebsgeschwindigkeiten der jeweiligen Raupen eines Fahrwerks in der Kurve.

Hierbei ist es vorteilhaft, wenn die Steuerung die Lage des Stetigförderers über die neutrale Faser der Fahrmodule des Stetigförderers ermittelt. Indem die Lageerfassung des gesamten System des Stetigförderers über die neutrale Faser des Kurvenförderers erfolgt, können die unterschiedlichen Fahrgeschwindigkeiten der einzelnen Raupen auf geraden Strecken und in Kurven genau bestimmt werden. Bei einer Kurvenfahrt kann dadurch die Weitergabe einer Lenkzylinderposition an die nachfolgenden Lenkzylinder erfolgen.

Um durchdrehende oder in der Luft hängende Raupenelemente zu egalisieren wird vorgeschlagen, dass die Steuerung die Geschwindigkeit der angetriebenen Raupen des Raupenfahrwerks ermittelt.

Ein Ausführungsbeispiel eines verfahrbaren Stetigförderers mit einzelnen Fahrmodulen ist in der Zeichnung dargestellt und wird im Folgenden näher erläutert.

Es zeigt
- Figur 1: eine Draufsicht auf einen Stetigförderer, der geschlängelt an Hindernissen vorbeigeführt ist,
- Figur 2: eine Draufsicht auf zwei Fahrmodule des in Figur 1 gezeigten Stetigför- derers,
- Figur 3: eine Seitenansicht von zwei Fahrmodulen des in Figur 1 gezeigten Stetig- förderers,
- Figur 4: eine vergrößerte Draufsicht auf vier Fahrmodule eines Stetigförderers in einer Kurvenlage,
- Figur 5: eine perspektivische Ansicht eines Details des in Figur 4 gezeigten Ste- tigförderers,
- Figur 6: eine schematische Seitenansicht eines Details des Troggurtes,
- Figur 7: eine Seitenansicht eines Ausschnitts eines Fahrwerkmoduls mit Trogför- derer,
- Figur 8: eine Seitenansicht eines Fahrmoduls mit Trogförderer,
- Figur 9: eine weitere Seitenansicht des in Figur 8 gezeigten Fahrmoduls,
- Figur 10: eine Draufsicht auf das in Figur 8 gezeigte Fahrmodul,
- Figur 11: eine perspektivische Ansicht des in Figur 8 gezeigten Fahrmoduls,
- Figur 12: das in Figur 8 gezeigte Fahrmodul ohne Trogförderer,
- Figur 13: eine Seitenansicht des in Figur 12 gezeigten Fahrmoduls ohne Trogförde- rer,
- Figur 14: ein Rahmenteil des in Figur 12 gezeigten Fahrmoduls,
- Figur 15: das mit dem in Figur 14 gezeigten Rahmenteil zusammenwirkende ent- sprechende Rahmenteil,
- Figur 16: ein Rahmenteil für ein Brückenmodul,
- Figur 17: eine dreidimensionale Ansicht einer Antriebsstation,
- Figur 18: eine dreidimensionale Ansicht einer Umlenkstation,
- Figur 19: eine Draufsicht auf aneinandergesetzte Rahmen zweier Fahrwerksmodule und eines Brückenmoduls und
- Figur 20: eine dreidimensionale Ansicht der in Figur 19 gezeigten Konstruktion.

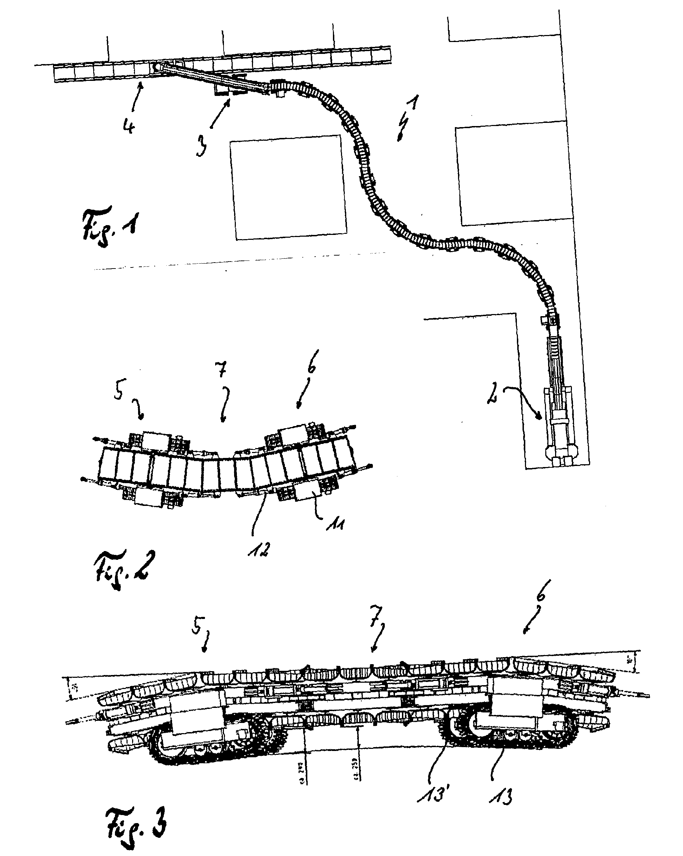

Der in Figur 1 gezeigte verfahrbare Stetigförderer 1 ist als geschlängelte Linie zwischen einem Continuous Miner 2 und einem Hopper 3, der das Fördergut auf einen stationären Hauptförderer 4 übergibt.

Der Stetigförderer 1 zeichnet sich durch eine hohe Mobilität und Flexibilität aus, die es erlaubt, dem Continuous Miner 2 zu folgen und das gelöste Mineral mit hoher Kapazität auf den stationären Hauptförderer 4 zu transportieren. Hinter dem Continuous Miner kann ein Feder Breaker (nicht gezeigt) nachgeschaltet werden. Die Gesamtlänge des modular aufgebauten Stetigförderers 1 kann bis zu 150 Meter betragen.

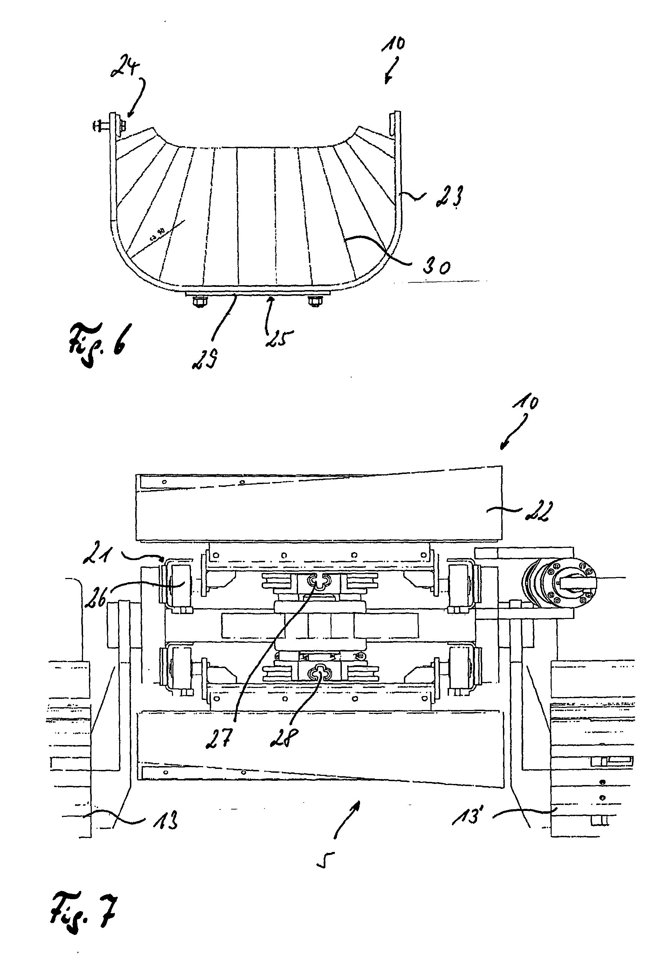

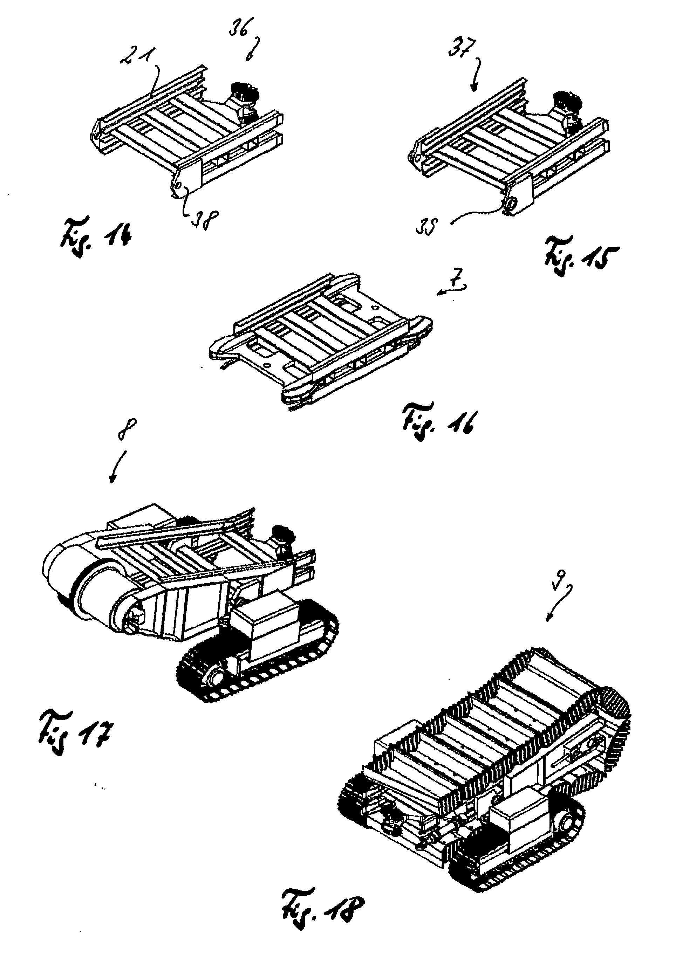

Der Stetigförderer 1 besteht im Wesentlichen aus Fahrwerksmodulen 5, 6, Brückenmodulen 7, einem Antriebsmodul 8 (vergleiche Figur 17), einem Umlenkmodul 9 (vergleiche Figur 18) und miteinander verbundenen Trögen 10 (vergleiche Figuren 6 und 7). Hinzu kommt eine Hydraulik, von der in Figur 2 Hydroaggregate 11 und Lenkzylinder 12 gezeigt sind.

Die Fahrwerksmodule 5, 6 haben jeweils zwei Raupenzüge 13 und 13', die parallel zueinander angeordnet sind.

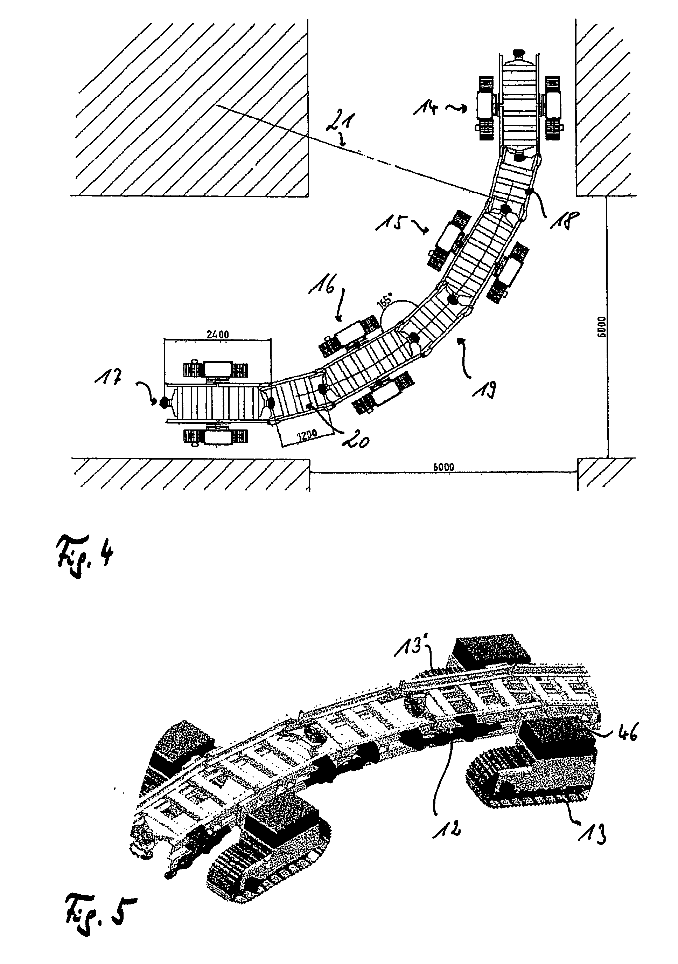

Die in Figur 4 gezeigte Draufsicht zeigt, wie die einzelnen Fahrmodule 14, 15, 16 und 17 mittels Brückenmodulen 18, 19 und 20 derart gelenkig miteinander verbunden sind, dass ein Radius 21 von etwa 6 Metern eingehalten werden kann. Hierzu sind die Fahrmodule etwa 2,4 Meter lang, während ein Brückenmodul etwa 1,2 Meter lang ist. Zwischen Fahrmodul und Brückenmodul kann ein Winkel von 165° erzeugt werden.

Durch diesen flexiblen Fahrwerksaufbau kann der gesamte Förderer in Kurven verfahren werden und Sättel überwinden (vergleiche Figur 3). Durch die modulare Bauweise wird ein schnelles Kürzen und Verlängern der Anlage gewährleistet, wodurch die Flexibilität steigt. Zwischen den Modulen ist eine vertikale und horizontale Winkeländerung für Kurven und zum Durchfahren von Senken und Mulden vorgesehen. Durch die horizontale Abwicklung von insgesamt 15° kann ein Kurvenradius von etwa 6 Metern erreicht werden. Durch das spezielle Konstruktionsprinzip wird erreicht, dass auch bei einer extremen Schieflage des Förderers eine exakte Führung der Tröge des Trogförderers mittels auf Schienen 21 geführten Rollwagen 22 gewährleistet ist.

Der Troggurt besteht aus einer Vielzahl an in Figur 6 schematisch dargestellten Trogelementen 10, die einen Troggurt 23 aufweisen, der seitlich über eine Schraubverbindung 24 mit einem weiteren Element in Verbindung steht. Der Troggurt 23 ist an seiner Unterseite 25 mit einer Kette (nicht gezeigt) verbunden.

Die Unterseite 25 steht mit einem Rollensystem 26 in Verbindung, das auf Schienen 21 abrollt. In der Kettenführung 27, 28 ist eine Kette (nicht gezeigt) geführt, die die Tröge relativ zur am Fahrmodul befestigten Schiene 21 bewegt.

Hierdurch ist der Stetigförderer in der Lage, große Schüttgutströme zu transportieren und gleichzeitig ist es durch die hohe Flexibilität der Trogsysteme möglich, enge Kurvenradien zu realisieren. Durch die Rollenreibung sind die Zugkräfte im Trogsystem klein.

Die Walkarbeit im Trogförderer gewährleistet selbst bei nassem Schüttgut in der Kehr- und Antriebsstation eine Selbstreinigung des Troggurtes.

Der in Figur 6 gezeigte Troggurt besteht im Wesentlichen aus einem leichten Gewebegurt 29, an dem der Troggurt 23 mit den Wellenkanten 30 befestigt ist.

Die Tröge 10 haben nur die Funktion das Schüttgut aufzunehmen. Alle anderen Kräfte werden durch die in der Kettenführung 27, 28 geführte Kette aufgenommen. Gewichtskräfte des Schüttgutes werden durch das Laufrollensystem 26 in den Rahmen des Fahrmoduls 6 übertragen. Eine exakte horizontale und vertikale Führung des Troggurtes 29 sowie der Antriebskette wird durch das Führungssystem mittels der Führung 27 und 28 etwa in der Mitte zwischen den Raupen 13 und 13' des Fahrmoduls 5 realisiert. Mit dieser Konstruktion wird auch eine exakte Führung der Kette an den Knickstellen des Stetigförderers 1 erreicht.

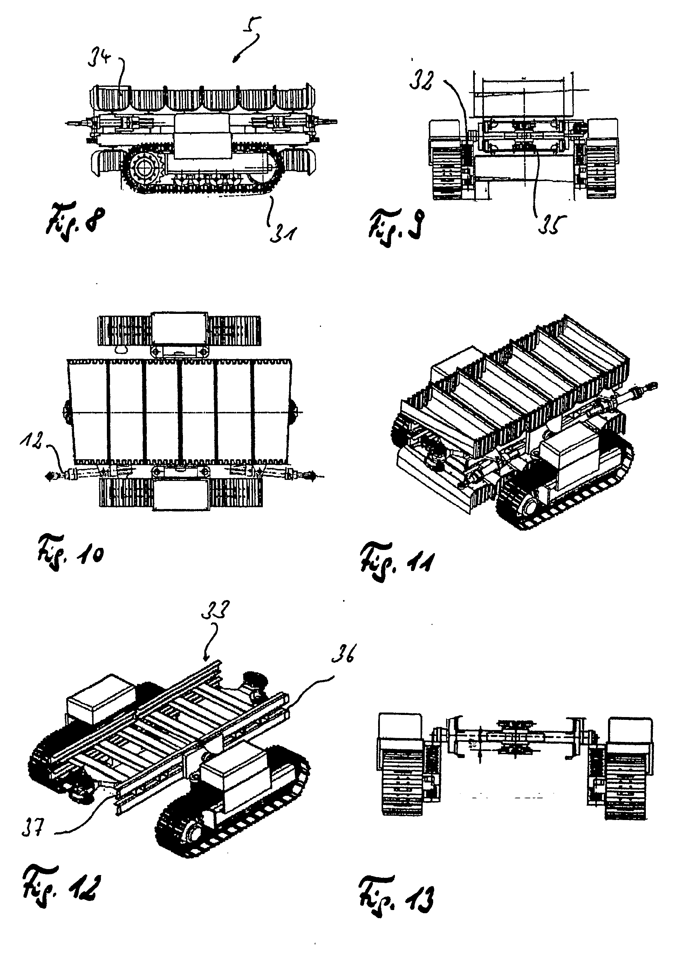

Das in den Figuren 8 bis 11 gezeigte Fahrwerksmodul 5 besteht aus dem Raupenfahrwerk 31, der Federaufhängung 32, den Lenkzylindern 12, dem in den Figuren 12 und 13 gezeigten Führungsrahmen 33 für Trogförderer 34 und der Kettenführung 35. Die Lenkzylinder 12 verbinden das Fahrmodul 5 hierbei mit einem in Figur 16 gezeigten Brückenmodul 7.

Die Figuren 12 bis 15 zeigen, dass ein Fahrmodul 5 zwei Rahmen 36 und 37 aufweist, die bis auf die Verbindung 38, 39 identisch ausgebildet sind und zu einer leiterartigen an der Verbindungsstelle abknickbaren Konstruktion zusammengesetzt sind.

Das Brückenmodul 7 dient als Verbindung zwischen den einzelnen Fahrmodulen 5 und 6. Durch das Brückenmodul 7 ist eine horizontale Abwinkelung möglich, während die Verbindung 38, 39 der Rahmenteile des Fahrmoduls eine vertikale Abwicklung ermöglichen. Die an den in den Figuren 14 bis 16 gezeigten Rahmenelementen angeordneten Schienen 21 weisen Kunststoffplatten auf, auf denen das Rollensystem 26 abrollt.

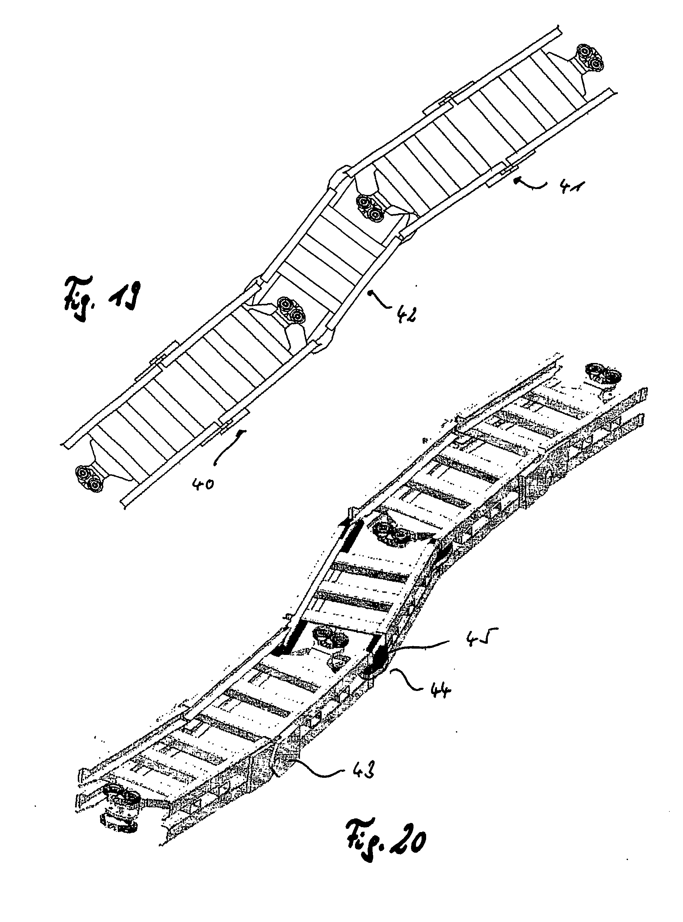

Das Zusammenwirken von den Rahmen 40 und 41 zweier Fahrmodule und dem Rahmen 42 eines Brückenmoduls ist in den Figuren 19 und 20 gezeigt. Während das Gelenk 43 eine Abwicklung aus der horizontalen Ebene heraus ermöglicht, sorgt das Gelenk 44 für die Möglichkeit eines Abknickens zur Seite, bei dem die Rahmenteile des Brückenelementes und die Rahmenteile des Fahrmoduls auf einer Auflagefläche 45 gleiten.

Der Stetigförderer ist mit einer Hydraulik ausgerüstet, die am Fahrmodul 6 als Hydraulikaggregat 11 vorgesehen ist. Ein derartiges Hydraulikaggregat 11 sorgt für einen Antrieb der Fahrmodule 5, 6 und versorgt die Lenkzylinder 12. Über Proportionalventile wird die Lenkung gesteuert.

Die Lenkung erfolgt im Wesentlichen über die Lenkzylinder, wobei jedoch auch das Fahrwerk mit den Raupen 13, 13' zur Unterstützung der Lenkbewegung eingesetzt werden kann. Vorteilhaft ist es, wenn die Lenkzylinder wie in Figur 5 gezeigt, nur an einer Seite positioniert werden und sich die Hydraulikaggregate und die Ventiltechnik in Boxen 46 über den Raupen 13, 13' befinden.

## Patentansprüche

1. Verfahrbarer Stetigförderer aus einzelnen Fahrmodulen, wobei jedes Fahrmodul Stetigfördermittel und ein Raupenfahrwerk aufweist, wobei das Raupenfahrwerk mehr als einen Raupenzug aufweist, **da*durch gekennzeichnet, dass*** zwei aufeinander folgende Fahrmodule mittels mindestens einem Lenkzylinder miteinander verbunden sind.

2. Verfahrbarer Stetigförderer nach einem der vorhergehenden Ansprüche, ***dadurch gekennzeichnet, dass*** zwei aufeinander folgende Fahrmodule mittels zwei Lenkzylindern miteinander verbunden sind.

3. Verfahrbarer Stetigförderer nach einem der vorhergehenden Ansprüche, ***dadurch gekennzeichnet, dass*** nur einseitig am Fahrmodul Lenkzylinder angeordnet sind.

4. Verfahrbarer Stetigförderer nach einem der vorhergehenden Ansprüche, ***dadurch gekennzeichnet, dass*** er mindestens einen Hydraulikzylinder als Lenkzylinder aufweist.

5. Verfahrbarer Stetigförderer nach einem der vorhergehenden Ansprüche, ***dadurch gekennzeichnet, dass*** jedes Fahrmodul eine Rahmenkonstruktion mit einer Kettenführung aufweist.

6. Verfahrbarer Stetigförderer nach einem der vorhergehenden Ansprüche, ***dadurch gekennzeichnet, dass*** er eine Rahmenkonstruktion mit zwei gleichen sich entsprechenden gelenkig miteinander verbundenen Rahmenteilen aufweist.

7. Verfahrbarer Stetigförderer nach einem der vorhergehenden Ansprüche, ***dadurch gekennzeichnet, dass*** er ein Brückenmodul mit einer Rahmenkonstruktion mit einer Führung für das Stetigfördermittel aufweist.

8. Verfahrbarer Stetigförderer nach einem der vorhergehenden Ansprüche, ***dadurch gekennzeichnet, dass*** das Stetigfördermittel auf Rollen geführt ist.

9. Verfahrbarer Stetigförderer nach einem der vorhergehenden Ansprüche, ***dadurch gekennzeichnet, dass*** das Stetigfördermittel ein Trogförderer ist.

10. Verfahrbarer Stetigförderer nach Anspruch 9, ***dadurch gekennzeichnet, dass*** die Tröge des Trogförderers miteinander verschraubt sind.

11. Verfahrbarer Stetigförderer nach Anspruch 9 oder 10, ***dadurch gekennzeichnet, dass*** die Tröge des Trogförderers an einer Antriebskette befestigt sind.

12. Verfahrbarer Stetigförderer nach einem der vorhergehenden Ansprüche, ***dadurch gekennzeichnet, dass*** jedes Fahrmodul ein Hydroaggregat aufweist.

13. Verfahren zur Steuerung eines verfahrbaren Stetigförderers, insbesondere nach einem der vorhergehenden Ansprüche, bei dem eine Steuerung über die Position von Lenkzylindern die Antriebsgeschwindigkeiten von Raupen eines Raupenfahrwerks regelt oder steuert.

14. Verfahren nach Anspruch 13, ***dadurch gekennzeichnet, dass*** die Steuerung die Lage des Stetigförderers über die neutrale Faser der Fahrmodule des Stetigförderers ermittelt.

15. Verfahren nach Anspruch 13 oder 14, ***dadurch gekennzeichnet, dass*** die Steuerung die Geschwindigkeit der angetriebenen Raupen des Raupenfahrwerks mittelt.

## Claims

1. A movable continuous conveyor made from discrete travel modules, each travel module comprising continuous conveying means and a crawler chassis, said crawler chassis comprising more than one crawler block, ***characterized in that*** two consecutive travel modules are joined together by means of at least one steering cylinder.

2. The movable continuous conveyor as set forth in any one of the previous claims, ***characterized in that*** two consecutive travel modules are joined together by means of two steering cylinders.

3. The movable continuous conveyor as set forth in any one of the previous claims, ***characterized in that*** steering cylinders are arranged on only one side of the travel module.

4. The movable continuous conveyor as set forth in any one of the previous claims, ***characterized in that*** it comprises at least one hydraulic cylinder as the steering cylinder.

5. The movable continuous conveyor as set forth in any one of the previous claims, ***characterized in that*** each travel module comprises a frame construction with a chain guide.

6. The movable continuous conveyor as set forth in any one of the previous claims, ***characterized in that*** it comprises a frame construction with two identical, corresponding hinge-linked frame parts.

7. The movable continuous conveyor as set forth in any one of the previous claims, ***characterized in that*** it comprises a bridge module with a frame construction with a guide for the continuous conveyor means.

8. The movable continuous conveyor as set forth in any one of the previous claims, ***characterized in that*** the continuous conveyor means is guided on rollers.

9. The movable continuous conveyor as set forth in any one of the previous claims, ***characterized in that*** the continuous conveyor means is a trough conveyor.

10. The continuous conveyor as set forth in claim 9, ***characterized in that*** the troughs of the trough conveyor are screwed together.

11. The continuous conveyor as set forth in claim 9 or 10, ***characterized in that*** the troughs of the trough conveyor are fastened to a drive chain.

12. The movable continuous conveyor as set forth in any one of the previous claims, ***characterized in that*** each travel module comprises a hydraulic unit.

13. A method of controlling a movable continuous conveyor, in particular as set forth in any one of the previous claims, wherein a control unit regulates or controls the drive speed of crawlers of a crawler chassis via the position of steering cylinders.

14. The method as set forth in claim 13, ***characterized in that*** the control unit determines the position of the continuous conveyer via the neutral fiber of the travel modules of the continuous conveyor.

15. The method as set forth in claim 13 or 14, ***characterized in that*** the control unit determines the speed of the driven crawlers of the crawler chassis.

## Revendications

1. Convoyeur continu déplaçable constitué de différents modules roulants, chaque module roulant comportant des moyens de transport continu et un train de chenilles, le train de chenilles comportant plus d'une chenille, ***caractérisé en ce que*** deux modules roulants consécutifs sont reliés ensemble moyennant au moins un cylindre de direction.

2. Convoyeur continu déplaçable selon l'une quelconque des revendications précédentes, ***caractérisé en ce que*** deux modules roulants consécutifs sont reliés ensemble moyennant deux cylindres de direction.

3. Convoyeur continu déplaçable selon l'une quelconque des revendications précédentes, ***caractérisé en ce que*** des cylindres de direction ne sont disposés que sur un seul côté du module roulant.

4. Convoyeur continu déplaçable selon l'une quelconque des revendications précédentes, ***caractérisé en ce qu'**il* comporte au moins un cylindre hydraulique faisant office de cylindre de direction.

5. Convoyeur continu déplaçable selon l'une quelconque des revendications précédentes, ***caractérisé en ce que*** chaque module roulant comporte une construction sous forme de cadre avec guidage par chaîne.

6. Convoyeur continu déplaçable selon l'une quelconque des revendications précédentes, ***caractérisé en ce qu'**il* comporte une construction sous forme de cadre avec deux parties de cadre identiques qui se correspondent et sont articulées entre elles.

7. Convoyeur continu déplaçable selon l'une quelconque des revendications précédentes, ***caractérisé en ce qu'**il* comporte un module formant pont avec une construction sous forme de cadre avec un guidage pour le moyen de convoyeur continu.

8. Convoyeur continu déplaçable selon l'une quelconque des revendications précédentes, ***caractérisé en ce que*** le moyen de convoyeur continu est guidé sur des rouleaux.

9. Convoyeur continu déplaçable selon l'une quelconque des revendications précédentes, ***caractérisé en ce que*** le moyen de convoyeur continu est un convoyeur à godets.

10. Convoyeur continu déplaçable selon la revendication 9, ***caractérisé en ce que*** les godets du convoyeur à godets sont vissés ensemble.

11. Convoyeur continu déplaçable selon la revendication 9 ou 10, ***caractérisé en ce que*** les godets du convoyeur à godets sont fixés sur une chaîne d'entraînement.

12. Convoyeur continu déplaçable selon l'une quelconque des revendications précédentes, ***caractérisé en ce que*** chaque module roulant comporte un groupe hydraulique.

13. Procédé de commande d'un convoyeur continu déplaçable, notamment selon l'une quelconque des revendications précédentes, où une commande règle ou commande les vitesses d'entraînement de chenilles d'un train de chenilles par l'intermédiaire de la position de cylindres de direction.

14. Procédé selon la revendication 13, ***caractérisé en ce que*** la commande détermine la position du convoyeur continu par l'intermédiaire de la fibre neutre des modules roulants du convoyeur continu.

15. Procédé selon la revendication 13 ou 14, ***caractérisé en ce que*** la commande détermine la vitesse des chenilles menées du train de chenilles.
